# EUROPEAN PATENT SPECIFICATION

(11) **EP 0 563 709 B1**
(45) Date of publication and mention of the grant of the patent: **02.10.1996**
(21) Application number: 93104570.2
(22) Date of filing: 19.03.1993
(51) Int. Cl.: B60N 2/44, A47C 7/46

(54) **A seat with improved lumbar support, particularly for motor vehicles**
Sitz mit Lendenstütze, insbesondere für Kraftfahrzeuge
Siège muni d'un support lombaire, en particulier pour véhicles automobiles

(30) Priority: 24.03.1992 IT TO920248
(43) Date of publication of application: 06.10.1993
(73) Proprietor: FIAT AUTO S.p.A., 10135 Torino (IT)
(72) Inventor: Dal Monte, Antonio, I-00196 Roma (IT)
(74) Representative: Bosotti, Luciano

(56) References cited:
- EP-A- 0 420 824
- EP-A- 0 518 830
- EP-A- 0 540 481
- WO-A-91/16840
- DE-A- 3 045 809
- DE-A- 3 600 790
- DE-A- 3 735 428
- DE-A- 3 942 486
- FR-A- 2 554 397

## Description

The present invention relates to seats and, in particular, to a seat, the backrest of which includes a lumbar support element. Seats of this type are known in the art, for example, from the present Applicant's European patent application EP-A-0 420 824, which describes a lumbar support element having a generally hourglass- or butterfly-shaped configuration. The more relevant prior art is disclosed in DE-A-3 735 428 which shows a pneumatic lumbar support adapted to be raised or lowered.

Seats of the type specified above have been found particularly suitable for use as motor-vehicle seats but the present invention is not, in any case, intended to be limited strictly to this field of use.

In particular, it has been found that the presence of the support element enables the lumbar portion of the occupant's vertebral column to be supported correctly both along its vertical axis and as regards transverse restraint. For this purpose, it has been proposed (in this connection, see also European patent application EP-A-0 518 830, also in the name of the present Applicant) to form the support element, which is usually generally concave towards the front of the backrest (that is, the side which is intended to come into contact with the occupant's back), in a manner such that the overall profile of the element can be varied, for example, by the provision of an articulation in the central region of the support element so that it can be adjusted correctly for the backs of people of all body sizes. For this purpose, the rear fixing points of the lumbar support element are pivotable so as to act as hinges, thus achieving automatic adjustment for both narrow and wide backs. The convex profile of the face of the support facing the occupant's back can be designed so as to offer maximum comfort with the need for a minimal thickness of padding.

The wings or side portions of the lumbar support element described in the patent documents cited above are longer vertically than its central portion so as to offer ample lateral support surfaces. Amongst other things, this enables the lumbar support element to be used, without other structures, as the only restraint element inserted within the perimetral frame of the backrest. In any case, the lumbar support described in the prior applications constitutes a kind of basic item which can be inserted in any backrest frame in production.

As well as the automatic adjustment of the transverse restraint, which takes place as soon as a back bears against the backrest, the lumbar support described in the prior applications may be capable of several additional movements.

For example, (in this connection see EP-A-0 540 481) the fore-and-aft position of the support element may be adjusted whilst the transverse restraint remains unchanged. Thus, the seat can be adjusted for various conditions of lumbar curvature so that the seat can be adapted perfectly both for backs which are straight along a vertical axis and for backs characterised by pronounced curvature. This adjustment can be achieved whilst the profile of the lumbar support element is kept practically unchanged, thus preventing larger forces from being exerted on the central portion than on the side portions.

The lumbar support element in question may be controlled by any movement system (manually operated or motor-driven) so that the behaviour of the backrest can, so to speak, be personalised, that is, the characteristics of the backrest can be adjusted closely to the anthropometric characteristics or tastes of the occupant of the seat. In particular, application EP-A-0 518 830 describes a solution in which the profile of the lumbar support element can be varied so that its transverse restraint can be modified at will; this solution may be useful, for example, in a sports vehicle for which greater transverse bodily restraint of the driver or passengers may be appreciated on routes characterised by many bends.

The object of the present invention is further to improve the possibilities for the use of a lumbar support element of the type described above.

According to the present invention, this object is achieved by virtue of a seat having the specific characteristics recited in the claims which follow.

In summary, the solution according to the invention enables the lumbar support element to be raised or lowered so that it can be adjusted closely to the shape of the occupant's back and, in particular, to the characteristics of his lumbar curvature (high or low). This is achieved without substantial modification of the structure of the support element disclosed in EP-A-0 420 824 so that, at the production stage, use can be made of components which are already available. This applies in particular as regards the adjustment control system (the movement system) which enables the lumbar support element to be raised and lowered either by hand-operated mechanical means or with the use of motors.

The solution according to the present invention further enables the lumbar support to pivot generally about a substantially horizontal axis.

The invention will now be described, purely by way of non-limiting example, with reference to the appended drawings, in which:
Figure 1 is a schematic, elevational view showing the general structure of the backrest of a seat formed according to the invention, from behind,
Figures 2 and 3 show two possible variants of the solution according to the invention, and
Figures 4 to 6 are schematic, vertical median sections showing further characteristics of the structure of a seat according to the invention, in various adjustment positions.

In all the drawings, the backrest of a seat (not shown as a whole) is indicated B. The seat is generally a motor-vehicle seat although, as stated, the invention should not be considered to be limited to this particular field of use.

The structure of the backrest B is defined essentially by a frame or framework 1 of strong, rigid material (usually metal tubing) with a generally inverted-U-shaped configuration. The frame 1 can thus be seen generally to include two lateral uprights 2,the lower ends of which are connected or, rather, articulated to the squab (not shown) of the seat; this enables the dihedral angle defined jointly by the squab and the backrest to be varied selectively in order to adjust it to the anthropometric characteristics and tastes of the occupant of the seat. Naturally, the way in which the backrest is connected to the squab and the criteria which may be used to achieve the movement for adjusting their relative positions should be considered as widely known in the art, and hence not requiring a detailed description herein and also as irrelevant for the purposes of an understanding of the invention.

The two lateral uprights 2 are connected at the top of the frame 1 by a generally horizontal cross member 3 which defines the yoke portion of the general U-shape.

A generally hourglass- or butterfly-shaped lumbar support element 4 is mounted within the frame 1. The lumbar support element 4 is usually located slightly below the vertical mid-point of the backrest 1 so as to surround and contain the lumbar portion of the occupant's back.

The element 4 may be constituted by a single piece of rigid or flexible material or by two complementary portions which are articulated to each other to enable the general concavity of the element 4 to be varied. The element 4 is usually supported on the uprights 2 with the interposition of spring support elements 5 which have the advantage that they can adapt, by yielding resiliently, to variations of the profile of the element 4 or to fore-and-aft adjustment movements imparted thereto.

For a detailed description of possible embodiments of the element 4 and of possible solutions which may be adopted for fixing it resiliently to the frame 1, reference should be made to the European patent application EP-A-0 420 824, EP-A-0 518 830 and No. EP-A-0 540 481 already cited in the introduction to the present description.

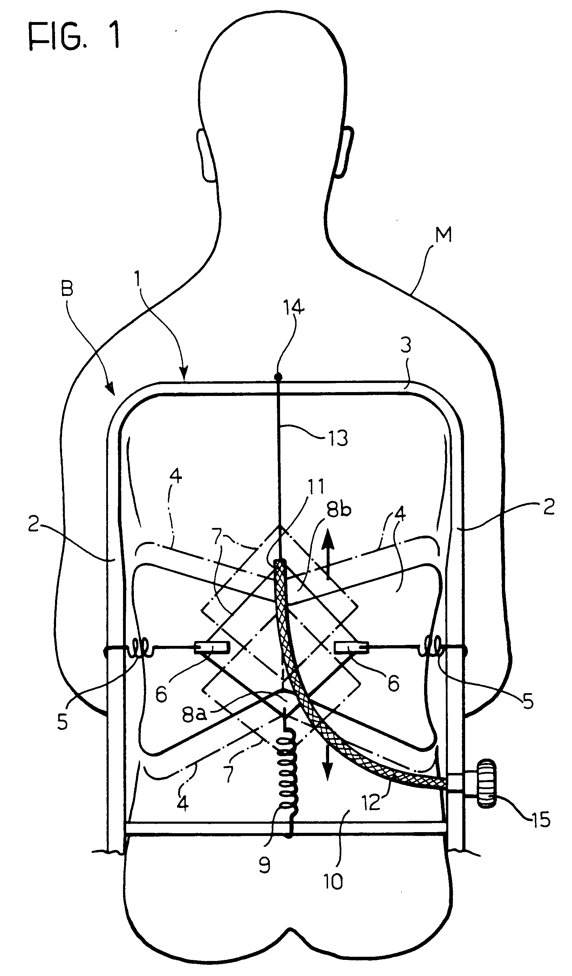

In the specific embodiment shown in Figure 1, a generally square or rhomboid frame 7 is connected to the element 4, usually to its rear face, for example, to the bracket-like formations or lugs 6 to which the inner ends of the springs 5 are connected (the outer ends of the springs 5 are fastened to the lateral uprights 2). The frame 7 is arranged so as to have a lower vertex 8a which is connected by a biasing spring 9 to a cross member 10 connecting the lower ends of the uprights 2, and an upper vertex 8b having a stirrup or bent portion 11 which constitutes an abutment and stop formation for the sheath of a flexible-cable control 12. The active element or actual cable 13 of the control 12 is connected to a central point 14 on the cross member 3.

The function of the frame 7, the four sides of which are constituted, for example, by flexible rods (for example, of metal or plastics material) and/or rods articulated to each other at the vertices of the rhomboid shape, is essentially to ensure that the central pulling forces exerted by the spring 9 and the cable 13 are distributed to the two wings or portions (the left-hand and right-hand portions) of the element 4 in a balanced and hence uniform manner.

The handle or knob for operating the device (of known type) which operates the flexible-cable control (12 to 14) is indicated 15.

In general, the action of the spring 9 is such as to bias the frame 7, and hence the lumbar support element 4, downwardly towards the position indicated in chain line in Figure 1. The operation of the handle or knob 15, however, tensions the flexible-cable control 12 to 14 overcoming the opposition of the spring 9 and pulling the frame 7, and hence the lumbar support element 4, gradually upwards, for example, towards the highest position shown in broken outline in Figure 1.

Thus, the motorist can selectively vary the vertical position of the lumbar support element 4 within the backrest B to adapt it to his anthropometric characteristics (low or high lumbar curvature) or driving tastes, by operating the control 15.

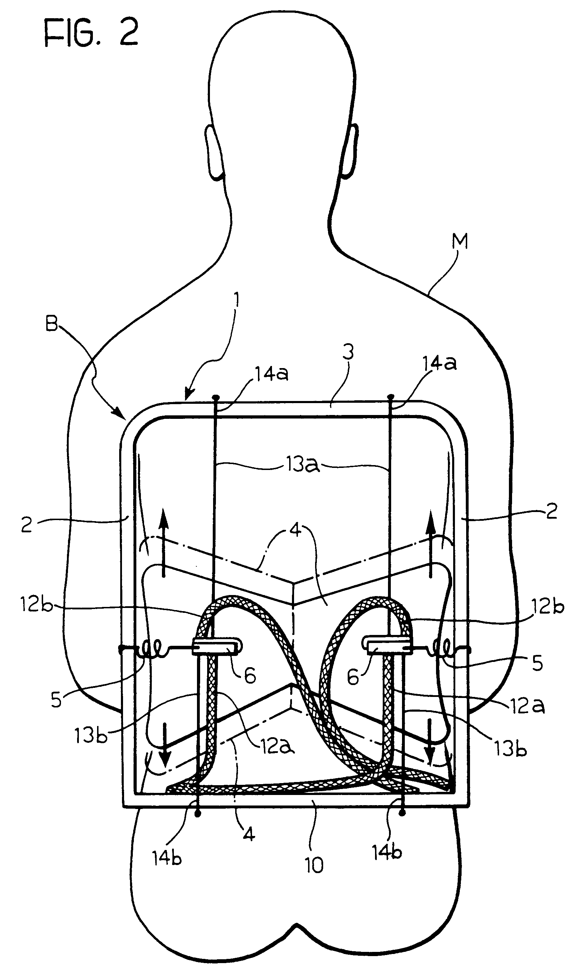

Figure 2 shows a variant in which the vertical adjustment of the lumbar support element 4 (also between a lowest position, shown schematically in chain line, and a highest position, shown schematically in broken outline) is achieved by means of two pairs of flexible-cable controls 12a, 12b which have respective active elements or cables 13a, 13b and act on the element 4 in a complementary manner and in a generally symmetrical arrangement.

In particular, each pair of flexible-cable controls acts on one of the wings or portions into which the element 4 is theoretically or actually divided along the vertical median plane of the backrest 3.

The sheaths of both the controls - which are moved by operating members of known type, not shown specifically in the drawings, (these may either be manually-operated members such as that indicated 15 in Figure 1 or motor-driven operating members) - abut the brackets or lugs 6 on the rear face of the element 4 and their respective cables 13a, 13b are joined to the upper cross member 3 of the backrest (at the points 14a in the case of the cables 13a) or to its lower cross member 10 (at the points 14b, in the case of the cables 13b).

In particular, the function of the flexible-cable controls 12a whose sheaths act on the lower faces of the lugs 6 is, when tensioned, to move the element 4 upwards (towards the position shown in broken outline). The controls 12b, whose sheaths act on the upper faces of the lugs 6, on the other hand, act in a direction such as to move the element 4 towards the lower cross member 10, thus bringing it towards the lowest position, which is shown in chain line.

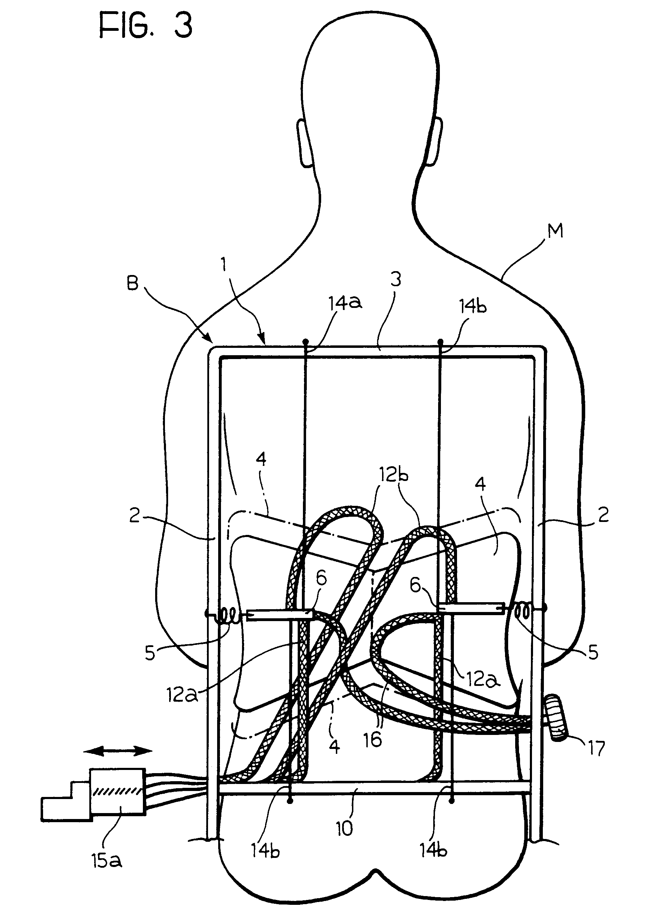

The same solution for the vertical movement of the element 4 is again proposed in the variant of Figure 3 which also has a motor element 15a for operating the various flexible-cable controls 12a, 12b, 13a, 13b; this may be an electric motor rather than a manually-operated system.

In particular, Figure 3 shows how this solution may coexist with a further movement system, also operated by flexible-cable controls, indicated 16. This further system enables the fore-and-aft position of the element 4 to be varied selectively by the operation of a rotary operating handle or knob 17 (which in turn acts on an element for tensioning the flexible-cable controls 16); this solution may, for example, be that described in greater detail in EP-A-0 540 481 already cited above.

Naturally, the solution according to the present invention may usefully be associated with solutions which enable the degree of concavity of the lumbar support element 4 to be varied selectively as well as with a system for varying the fore-and-aft adjustment position of the element 4.

Incidentally, it may be noted that, where there is simultaneous provision for two movements of the lumbar support element 4, (its fore-and-aft positioning, its vertical positioning, its degree of concavity) it may be advantageous to avoid excessive use of manual operating systems; this is to avoid an excessive concentration of adjustment knobs or handles on the edge of the squab. In these circumstances, therefore, it may be advantageous to use different types of adjustment, as in the embodiment of Figure 3, for example, with motorised vertical adjustment and manual operation for the fore-and-aft position.

As stated in the introduction to the present description, the butterfly-shaped lumbar support element 4 may even constitute the only support element present within the frame of the backrest. Particularly in prestige motor cars, however, the element 4 is preferably inserted within the padding 18 of the backrest, which is usually made of a foamed material. In this connection, it is considered advantageous for the element 4 to be fixed to the padding 18 at the production stage; this is achieved by the comoulding of the padding 18 onto the lumbar support element 4.

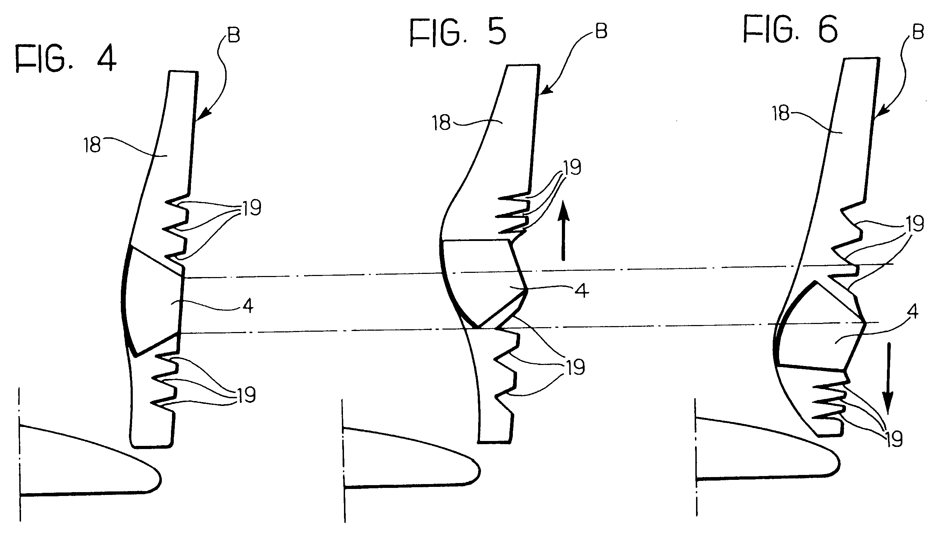

Figures 4 to 6 show the possible effects of the vertical adjustment movement of the lumbar support element 4 when it is fixed to the padding 18. In particular, if Figure 4 (which relates to an average adjustment position which may be the position reached when the support springs 5 of Figures 1 to 3 are in practically horizontal positions) is compared with the position of Figure 5 (in which the element 4 has been raised) and with the position of Figure 6 (in which the support element 4 is biased downwardly) it will be appreciated that - precisely because of the connection to the padding 18 - this movement does not assume the characteristics of a purely translatory movement, but is also accompanied by a certain pivoting of the element 4 about an axis (or more correctly the locus of an axis) identified by the points at which the inner ends of the springs 5 are connected to the element 4.

Considerations of a physiological and anthropometrical nature indicate that a variation of about 4 cm in the vertical position of the support element 4 could be considered very satisfactory. The solution according to the invention, however, enables an adjustment travel of about 8 cm in a normal motor-vehicle seat.

Moreover, to facilitate the pivoting or rotation about a horizontal axis which accompanies the change in the height of the lumbar support element 4, it has been found advantageous to form grooves or depressions 19 extending transverse the rear face of the padding 18. In practice, the grooves 19 may be compared to actual channels formed in the rear face of the padding 18 with the removal of a large amount of material. This removal may take place either during the moulding of the padding (as a result of the presence of corresponding ribs in the moulding dies) or after moulding (for example, by a mechanical operation to remove the material). The presence of the grooves 19 makes the padding more compressible vertically, enabling it to follow the adjustment movement of the lumbar support element with a generally concertina-like movement. This enables a correct and controlled vertical movement of the lumbar support 4. The solution of Figures 4 to 6 may be used equally well with any of the various movement systems shown in Figures 1 to 3.

Finally, it can be seen that, in the solution of Figure 1 (with the use of a single flexible-cable control acting in a central position within the seat), the use of a motor of a considerable power may be required (in the case of a motor-driven control) and it may also be necessary to arrange the frame 7 so that the pulling forces exerted by the cable 13 are distributed correctly over the entire support element 4. From this point of view, the solutions of Figures 2 and 3 (with two pairs of flexible-cable controls each including two controls operating in complementary symmetrical conditions) may be considered more advantageous.

## Claims

1. A seat including a backrest (B) with a support element (4) for cooperating with and supporting the lumbar portion of the occupant's back, said support element (4) having associated movement means (12, 13; 12a, 12b; 13a, 13b) for selectively varying the vertical position of the element (4) relative to the backrest (B), characterised in that the lumbar support element (4) is supported in the backrest (1) with the interposition of means (5) for enabling the element (4) to pivot generally about a substantially horizontal axis.

2. A seat according to Claim 1, characterised in that the lumbar support element (4) is generally hourglass- or butterfly-shaped.

3. A seat according to any one of the preceding claims, characterised in that the element (4) carries associated resilient means (5) for supporting the element (4) in the backrest (B).

4. A seat according to any one of the preceding claims, characterised in that the movement means include at least one flexible-cable control (12, 13; 12a, 12b; 13a, 13b).

5. A seat according to Claim 4, characterised in that the movement means (12, 13) act in a generally central position of the backrest (B).

6. A seat according to Claim 5, characterised in that the movement means (12, 13) are associated with means for distributing the forces (7) applied by the movement means (12) to the lumbar support element (4) as a whole.

7. A seat according to any one of the preceding claims, characterised in that the support element (4) has associated resilient means (9) for biasing it towards an end position of its vertical adjustment movement, and in that the movement means (12, 13) act in opposition to the resilient biasing means (9).

8. A seat according to any one of the preceding claims, characterised in that the movement means include at least two flexible-cable controls (12a,12b) which operate in a complementary manner in order to move the lumbar support element (4) upwards and downwards, respectively.

9. A seat according to any one of the preceding claims, characterised in that the movement means include two movement units (12a, 12b; 13a, 13b) acting on different portions of the lumbar support element (4) in a generally symmetrical arrangement.

10. A seat according to any one of the preceding claims, characterised in that the movement means are operated manually (15).

11. A seat according to any one of Claims 1 to 9, characterised in that the movement means are motor-driven (15).

12. A seat according to any one of Claims 1 to 9, characterised in that, in addition to the movement means (12a, 13a; 12b, 13b) for selectively controlling the vertical position of the lumbar support element (4), the lumbar support element (4) is associated with further movement means (16) for selectively varying at least one further characteristic of the lumbar support element (4).

13. A seat according to Claim 12, characterised in that the further movement means (16) can selectively vary at least one characteristic of the lumbar support element (4) selected from the group constituted by:
- the fore-and-aft position of the lumbar support element (4),
- the degree of concavity of the lumbar support element (4).

14. A seat according to Claim 12 or Claim 13, characterised in that the movement means (12a, 13a; 12b, 13b) and the further movement means (16) carry associated drive means (15a, 17) of different kinds.

15. A seat according to any one of the preceding claims, characterised in that the lumbar support element (4) is fixed to a mass of padding (18) of the backrest (B).

16. A seat according to Claim 15, characterised in that the padding (18) has grooves (19), preferably in its rear face, for facilitating the compression and extension of the padding (18) as a result of the adjustment of the vertical position of the lumbar support element (4).

## Patentansprüche

1. Sitz umfassend eine Rückenlehne (B) mit einem Stützelement (4), weiches mit dem Lendenbereich des Benützers zusammenwirkt und diesen stützt, wobei das Lendenstützelement (4) ihm zugeordnete Betätigungsmittel (12, 13; 12a, 12b; 13a, 13b) aufweist, um die vertikale Stellung des Elementes (4) in bezug auf die Rückenlehne (B) wahlweise zu verändern, dadurch gekennzeichnet, daß zwischen dem Lendenstützelement (4) und der Rückenlehne (1) Mittel (5) angeordnet sind, die eine Schwenkbewegung des Elementes (4) um eine im wesentlichen horizontale Achse zu ermöglichen.

2. Sitz nach Anspruch 1, dadurch gekennzeichnet, daß das Lendenstützelement (4) im wesentlichen stundenglas- oder schmetterlingförmig ist.

3. Sitz nach einem der vorhergehenden Ansprüche, dadurch gekennzeichnet, daß das Element (4) ihm zugeordnete elastische Mittel (5) zum Stützen des Elementes (4) in der Rückenlehne (B) trägt.

4. Sitz nach einem der vorhergehenden Ansprüche, dadurch gekennzeichnet, daß die Betätigungsmittel mindestens einen biegsamen Seilzug (12, 13; 12a, 12b; 13a, 13b) umfassen.

5. Sitz nach Anspruch 4, dadurch gekennzeichnet, daß die Betätigungsmittel (12, 13) in einer im wesentlichen mittleren Stellung der Rückenlehne (B) wirksam sind.

6. Sitz nach Anspruch 5, dadurch gekennzeichnet, daß die Betätigungsmittel (12, 13) Mitteln zur Verteilung der Kräfte (7) zugeordnet sind, die durch die Betätigungsmittel (12) auf das Lendenstützelement (4) als ganzes einwirken.

7. Sitz nach einem der vorhergehenden Ansprüche, dadurch gekennzeichnet, daß das Stützelement (4) ihm zugeordnete, federnde Mittel (9) aufweist, um dieses in eine Endstellung seiner vertikalen Stellbewegung vorzuspannen, und daß die Betätigungsmittel (12, 13) entgegengesetzt zu den federnden Vorspannmitteln (9) wirken.

8. Sitz nach einem der vorhergehenden Ansprüche, dadurch gekennzeichnet, daß die Betätigungsmittel mindestens zwei biegsame Sellzüge (12a, 12b) umfassen, welche einander ergänzend arbeiten, um das Lendenstützelement (4) nach oben bzw. nach unten zu bewegen.

9. Sitz nach einem der vorhergehenden Ansprüche, dadurch gekennzeichnet, daß die Betätigungsmittel zwei Betätigungseinrichtungen (12a, 12b; 13a, 13b) umfassen, die auf verschiedene Bereiche des Lendenstützelementes (4) in einer im wesentlichen symmetrischen Anordnung wirken.

10. Sitz nach einem der vorhergehenden Ansprüche, dadurch gekennzeichnet, daß die Betätigungsmittel händisch (15) betätigbar sind.

11. Sitz nach einem der Ansprüche 1 bis 9, dadurch gekennzeichnet, daß die Betätigungsmittel motorisch (15) angetrieben sind.

12. Sitz nach einem der Ansprüche 1 bis 9, dadurch gekennzeichnet, daß zusätzlich zu den Betätigungsmitteln (12a, 13a; 12b, 13b) zum wählbaren Verstellen der vertikalen Stellung des Lendenstützelementes (4) dem Stützelement (4) weitere Betätigungsmittel (16) zugeordnet sind, um zumindest eine weitere Eigenschaft des Lendenstützelementes (4) wahlweise zu verändern.

13. Sitz nach Anspruch 12, dadurch gekennzeichnet, daß die weiteren Betätigungsmittel (16) mindestens eines der folgenden Merkmale des Lendenstützelementes (4) verändern können:
- die Stellung des Lendenstützelementes (4) in Längsrichtung,
- den Grad der konkaven Form des Lendenstützelementes (4).

14. Sitz nach Anspruch 12 oder Anspruch 13, dadurch gekennzeichnet, daß die Betätigungsmittel (12a, 13a; 12b, 13b) und die weiteren Betätigungsmittel (16) zugehörige Antriebsmittel (15a, 17) verschiedener Art tragen.

15. Sitz nach einem der vorhergehenden Ansprüche, dadurch gekennzeichnet, daß das Lendenstützelement (4) an einer Polsterung (18) der Rückenlehne (B) befestigt ist.

16. Sitz nach Anspruch 15, dadurch gekennzeichnet, daß die Polsterung (18) vorzugsweise an ihrer hinteren Seite Rillen (19) hat, um das durch das Verstellen der vertikalen Stellung des Lendenstützelementes (4) entstehende Zusamendrücken und Ausdehnen der Polsterung (18) zu erleichtern.

## Revendications

1. Siège comprenant un dossier (B) équipé d'un élément de soutien (4) destiné à coopérer avec la partie lombaire du dos d'un occupant et à soutenir cette partie lombaire, ledit élément de soutien (4) ayant des moyens de déplacement (12, 13 ; 12a, 12b ; 13a, 13b) qui lui sont associés pour faire varier sélectivement la position verticale de l'élément (4) par rapport au dossier (B), caractérisé en ce que l'élément de soutien lombaire (4) est supporté dans le dossier (1) avec interposition de moyens (5) destinés à permettre à l'élément (4) de pivoter à peu près autour d'un axe sensiblement horizontal.

2. Siège selon la revendication 1, caractérisé en ce que l'élément de soutien lombaire (4) est de façon générale en forme de sablier ou de papillon.

3. Siège selon une quelconque des revendications précédentes, caractérisé en ce que l'élément (4) porte des moyens élastiques associés (5) destinés à supporter l'élément (4) dans le dossier (B).

4. Siège selon une quelconque des revendications précédentes, caractérisé en ce que les moyens de déplacement comprennent au moins une commande à câble flexible (12, 13 ; 12a, 12b ; 13a, 13b).

5. Siège selon la revendication 4, caractérisé en ce que les moyens de déplacement (12, 13) agissent dans une position à peu près centrale du dossier (B).

6. Siège selon la revendication 5, caractérisé en ce que les moyens de déplacement (12, 13) sont associés à des moyens servant à distribuer les forces (7) appliquées par les moyens de déplacement (12) à l'élément de soutien lombaire (4) dans son ensemble.

7. Siège selon une quelconque des revendications précédentes, caractérisé en ce que l'élément de soutien (4) possède des moyens élastiques (9) qui lui sont associés pour tendre à le repousser vers une position d'extrémité de son mouvement de réglage vertical, et en ce que les moyens de déplacement (12, 13) agissent en opposition par rapport aux moyens de rappel élastiques (9).

8. Siège selon une quelconque des revendications précédentes, caractérisé en ce que les moyens de déplacement comprennent au moins deux commandes à câble flexible (12a, 12b) qui travaillent d'une façon complémentaire pour déplacer l'élément de soutien lombaire (4) vers le haut et vers le bas respectivement.

9. Siège selon une quelconque des revendications précédentes, caractérisé en ce que les moyens de déplacement comprennent deux unités de déplacement (12a, 12b ; 13a, 13b) agissant sur différentes portions de l'élément de soutien lombaire (4) dans une disposition à peu près symétrique.

10. Siège selon une quelconque des revendications précédentes, caractérisé en ce que les moyens de déplacement sont manoeuvrés manuellement (15).

11. Siège selon une quelconque des revendications 1 à 9, caractérisé en ce que les moyens de déplacement sont entraînés au moteur (15).

12. Siège selon une quelconque des revendications 1 à 9, caractérisé en ce qu'en supplément des moyens de déplacement (12a, 13a ; 12b, 13b) servant à commander sélectivement la position verticale de l'élément de soutien lombaire (4), l'élément de soutien lombaire (4) est associé à des moyens de déplacement additionnels (16) servant à faire varier sélectivement au moins une autre caractéristique de l'élément de soutien lombaire (4).

13. Siège selon la revendication 12, caractérisé en ce que les moyens de déplacement additionnels (16) peuvent sélectivement faire varier au moins une caractéristique de l'élément de soutien lombaire (4) choisie dans le groupe constitué par :
- la position avant-arrière de l'élément de soutien lombaire (4),
- le degré de concavité de l'élément de soutien lombaire (4).

14. Siège selon la revendication 12 ou la revendication 13, caractérisé en ce que les moyens de déplacement (12a, 13a ; 12b, 13b) et les moyens de déplacement additionnels (16) portent des moyens d'entraînement associés (15a, 17) de différentes sortes.

15. Siège selon une quelconque des revendications précédentes, caractérisé en ce que l'élément de soutien lombaire (4) est fixé à une masse de rembourrage (18) du dossier (B).

16. Siège selon la revendication 15, caractérisé en ce que le rembourrage (18) possède des rainures (19) de préférence dans sa face arrière, pour faciliter la compression et l'extension du rembourrage (18) résultant du réglage de la position verticale de l'élément de soutien lombaire (4).
